# EUROPEAN PATENT APPLICATION

(11) **EP 3 962 118 A1**
(43) Date of publication of application: **02.03.2022**
(21) Application number: 20818510.8
(22) Date of filing: 04.06.2020
(51) Int. Cl.: H04W 4/02, H04W 4/024, G01C 21/00

(54) **INTERACTION METHOD EMPLOYING OPTICAL COMMUNICATION APPARATUS, AND ELECTRONIC DEVICE**

(30) Priority: 05.06.2019 CN 201910485776; 05.06.2019 CN 201910485765; 26.09.2019 CN 201910918154
(71) Applicant: Beijing Whyhow Information Technology Co., Ltd, Beijing 100176 (CN)
(72) Inventor: LI, Jiangliang, Beijing 100176 (CN); FANG, Jun, Shaanxi 710068 (CN)
(74) Representative: Gregory, John David Charles
(86) International application number: PCT/CN2020/094383
(87) International publication number: WO 2020/244578

(57) **Abstract**

Disclosed are an interaction method based on an optical communication apparatus, and an electronic device. The method includes: receiving, by a server, information about a location of a first device from the first device; obtaining, by the server, location information of the first device using the information about the location of the first device; setting, by the server, a virtual object that is associated with the first device and has spatial location information, where the spatial location information of the virtual object is determined based on the location information of the first device; and sending, by the server, information about the virtual object to a second device, where the information includes the spatial location information of the virtual object, and the information about the virtual object can be used by the second device to present the virtual object on a display medium of the second device based on location information and attitude information of the second device determined using an optical communication apparatus.

## Description

### TECHNICAL FIELD

The present invention belongs to the information interaction field, and in particular relates to an interaction method based on an optical communication apparatus, and an electronic device.

### BACKGROUND

The statements in this section are only to provide background information related to the present invention to help understand the present invention, and the background information does not necessarily constitute the prior art.

With the widespread popularity of the Internet, various industries are trying to use an Internet platform to develop new service delivery methods, making "Internet +" a research hotspot. A widely applied service method is based on location. In many application scenarios, one of a user and a service provider needs to know the exact location of the other to implement convenient service interaction. However, the prior art cannot resolve this problem well.

Taking instant delivery service as an example, after ordering from a restaurant via the Internet at an outdoor location, a user can wait for a food delivery person to deliver food to the location. However, because the location provided by the user is usually an inexact location (for example, an intersection, a street, or a park), or even if it is an exact location, due to a large number of people nearby, it may be difficult for the food delivery person to determine which one of the people around is the user ordering the meal. As a result, the food delivery person has to make repeated phone calls to communicate with the user.

Another example of the location-based service is restaurant dining. After a user orders, a corresponding table number and ordering information are recorded by the restaurant. After dishes are ready, a delivery clerk delivers the dishes to a table of the corresponding table number. Therefore, the clerk needs to keep in mind the location of each table number, so that food can be delivered to a table accurately and quickly. However, such a method of relying only on the memory of the clerk is prone to errors in many cases (especially in a large restaurant), leading to misdelivery of dishes, or requiring the clerk to confirm with the user when the dishes are delivered.

To at least resolve the above problems to some extent, this application proposes an interaction method based on an optical communication apparatus, and an electronic device.

### SUMMARY

One aspect of the present invention relates to an interaction method based on an optical communication apparatus, including: receiving, by a server, information about a location of a first device from the first device; obtaining, by the server, location information of the first device using the information about the location of the first device; setting, by the server, a virtual object that is associated with the first device and has spatial location information, where the spatial location information of the virtual object is determined based on the location information of the first device; and sending, by the server, information about the virtual object to a second device, where the information includes the spatial location information of the virtual object, and the information about the virtual object can be used by the second device to present the virtual object on a display medium of the second device based on location information and attitude information that are determined by the second device using an optical communication apparatus.

Optionally, the obtaining location information of the first device using the information about the location of the first device includes at least one of the following: extracting the location information of the first device from the information about the location of the first device; obtaining the location information of the first device by analyzing the information about the location of the first device; or obtaining the location information of the first device through query using the information about the location of the first device.

Optionally, the information about the location of the first device includes location information of the first device relative to an optical communication apparatus, and the first device captures an image including the optical communication apparatus using an image capture component and analyzes the image to determine the location information of the first device relative to the optical communication apparatus.

Optionally, the second device captures an image including the optical communication apparatus using an image capture component and analyzes the image to determine the location information and/or attitude information of the second device.

Optionally, the method further includes: determining, by the server before the server sends information about a virtual object to the second device, one or more virtual objects that are associated with one or more first devices and need to be presented on the display medium of the second device.

Optionally, the method further includes: receiving, by the server, new information about the location of the first device from the first device; updating, by the server, the location information of the first device based on the new information about the location of the first device; updating, by the server, the spatial location information of the virtual object based on the updated location information of the first device; and sending, by the server, the updated spatial location information of the virtual object to the second device, so that the second device can present or update the virtual object on the display medium of the second device based on the location information and the attitude information of the second device and the updated spatial location information of the virtual object.

Optionally, the method further includes: receiving, by the server, information about a location of the second device from the second device, and determining the location information of the second device; setting, by the server, another virtual object that is associated with the second device and has spatial location information, where the spatial location information of the another virtual object is determined based on the location information of the second device; and sending, by the server, information about the another virtual object to the first device, where the information includes the spatial location information of the another virtual object, and the information about the another virtual object can be used by the first device to present the another virtual object on a display medium of the first device based on the location information and attitude information of the first device.

Optionally, before the sending, by the server, information about the virtual object to a second device, the method further includes: providing, by the server, the information from the first device or a part of the information to the second device; and receiving, by the server from the second device, a response to the information from the first device or to the part of the information.

Optionally, the method further includes: obtaining, by the server, attribute information of the first device; and setting, by the server based on the attribute information of the first device, the virtual object associated with the first device, where the attribute information of the first device includes information about the first device, information about a user of the first device, and/or information customized by the user of the first device.

Optionally, the location information of the first device is location information relative to an optical communication apparatus, location information in a site coordinate system, or location information in a world coordinate system; and/or the location information and the attitude information of the second device are location information and attitude information relative to an optical communication apparatus, location information and attitude information in a site coordinate system, or location information and attitude information in the world coordinate system.

Optionally, the optical communication apparatus associated with the location information of the first device and the optical communication apparatus associated with the location information of the second device are the same optical communication apparatus or different optical communication apparatuses, where the different optical communication apparatuses are in a certain relative pose relationship.

Optionally, an attitude of the virtual object can be adjusted according to change in a location and/or an attitude of the second device relative to the virtual object.

Another aspect of the present invention relates to a computer program product which, when executed by a processor, causes the processor to implement the foregoing method.

Another aspect of the present invention relates to a storage medium, storing a computer program which, when executed by a processor, causes the processor to implement the foregoing method.

Another aspect of the present invention relates to an electronic device, including a processor and a memory, where the memory stores a computer program which, when executed by the processor, causes the processor to implement the foregoing method.

### BRIEF DESCRIPTION OF THE DRAWINGS

The embodiments of the present invention are further described below with reference to the accompanying drawings, in which:
FIG. 1 shows an example of an optical label;
FIG. 2 shows an example of an optical label network;
FIG. 3 shows an optical label arranged above a restaurant door;
FIG. 4 shows a schematic diagram of a clerk delivering coffee to a user;
FIG. 5 shows a schematic diagram of superimposing a virtual object on a display medium of a clerk device;
FIG. 6 shows an interaction method based on an optical label according to an embodiment;
FIG. 7 shows an interaction method based on an optical label according to an embodiment;
FIG. 8 shows an interaction method based on an optical label according to an embodiment;
FIG. 9 shows an interaction system including two optical labels;
FIG. 10 shows an application scenario in which a location-based service scheme can be implemented between different individual users;
FIG. 11 shows a schematic diagram of superimposing a virtual object on a display medium of a second device; and
FIG. 12 shows an interaction method based on an optical label according to an embodiment.

### DETAILED DESCRIPTION

To make the objectives, technical schemes, and advantages of the present invention clearer and more comprehensible, the following further describes the present invention in detail with reference to the accompanying drawings using specific embodiments. It should be understood that the described specific embodiments are only used to explain the present invention rather than to limit the present invention.

An optical communication apparatus is also referred to as an optical label, and the two terms can be used interchangeably herein. The optical label can transfer information by emitting different light, which has advantages of a long recognition distance and a relaxed requirement on a visible light condition. Moreover, the information transferred by the optical label can change over time, thereby providing a large information capacity and a flexible configuration capability.

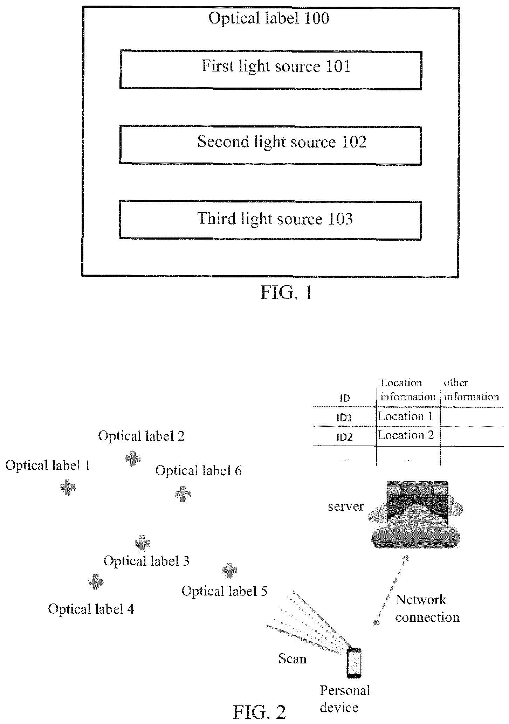

Generally, the optical label may include a controller and at least one light source. The controller can drive the light source through different drive modes to transfer different information to the outside. FIG. 1 shows an exemplary optical label 100, including three light sources (a first light source 101, a second light source 102, and a third light source 103). The optical label 100 further includes a controller (not shown in FIG. 1), which is configured to select a corresponding drive mode for each light source according to information to be transferred. For example, in different drive modes, the controller may use different drive signals to control a light emitting manner of the light source, so that when a device having an imaging function is used to photograph the optical label 100, an image of the light source in the optical label may present different appearances (for example, different colors, patterns, or brightness). A current drive mode of each light source can be obtained by analyzing the image of the light source in the optical label 100, so as to obtain information currently transferred by the optical label 100.

To provide a corresponding service to a user based on the optical label, each optical label may be assigned one piece of identification information (ID). The identification information is used by a manufacturer, a manager, a user, or the like of the optical label to uniquely recognize or identify the optical label. Generally, the controller in the optical label may drive the light source to transfer the identification information to the outside. A user may perform image capture on the optical label using a device to obtain the identification information transferred by the optical label, so as to access a corresponding service based on the identification information, for example, access a website associated with the identification information of the optical label, or obtain other information (for example, location information of the optical label corresponding to the identification information) associated with the identification information. The device may perform image capture on the optical label using a camera on the device to obtain an image including the optical label, and analyze an image of the optical label (or each light source in the optical label) in each image using a built-in application to recognize information transferred by the optical label.

The optical label may be installed at a fixed location, and the identification information and any other information (for example, the location information) of the optical label may be stored in a server. In practice, an optical label network may be constructed by a large number of optical labels. FIG. 2 shows an exemplary optical label network. The optical label network includes a plurality of optical labels and at least one server. Information about each optical label may be stored in the server. For example, the server may store identification information or any other information of each optical label, for example, service information related to the optical label, description information related to the optical label, or an attribute, such as location information, physical size information, physical shape information, or attitude or orientation information of the optical label. A device may query the server for other information about the optical label using recognized identification information of an optical label. The location information of the optical label may be an actual location of the optical label in the physical world, which may be indicated by geographic coordinate information. The server may be a software program running on a computing apparatus, a computing apparatus, or a cluster including a plurality of computing apparatuses. The optical label may be offline, that is, the optical label does not need to communicate with the server. Certainly, it will be appreciated that an on-line optical label capable of communicating with a server is also possible.

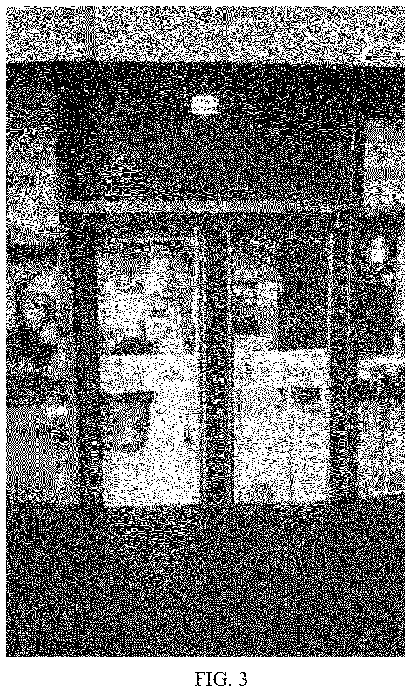

FIG. 3 shows an optical label arranged above a restaurant door. When a user scans the optical label using a device, identification information transferred by the optical label can be recognized, and a corresponding service can be accessed by using the identification information. For example, a website of the restaurant that is associated with the identification information of the optical label can be accessed. Optical labels may be deployed at various places as needed, for example, on squares, on shop facades, and in restaurants.

The optical label may be used as an anchor to superimpose a virtual object in a real scene, so as to, for example, use the virtual object to accurately mark a location of a user or a device in the real scene. The virtual object may be, for example, an icon, a picture, a text, a digit, an emoticon, a virtual 3D object, a 3D scene model, an animation, or a video.

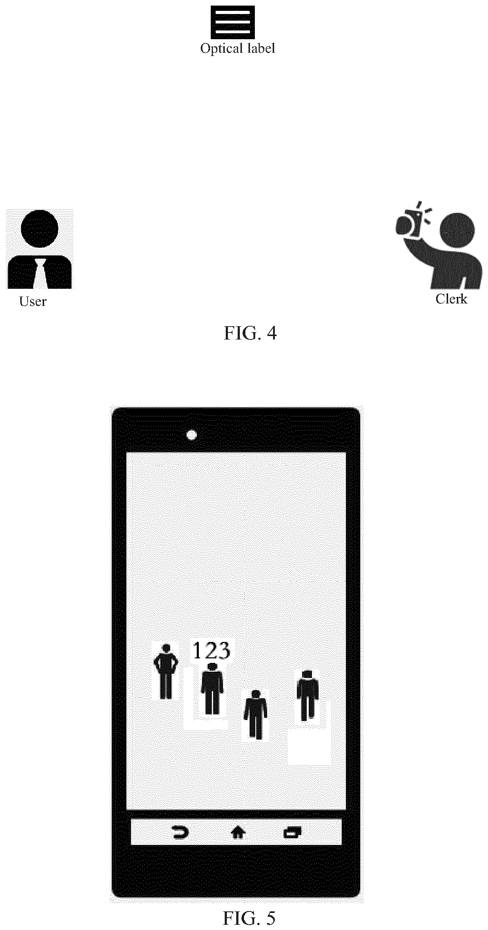

Instant delivery service is taken as an example for description herein. A user carrying a device (for example, a mobile phone or smart glasses) may want to purchase a cup of coffee when walking in a commercial street, and stand waiting for a clerk of a coffee shop to deliver the coffee to the location of the user. The user may use the device to scan and identify an optical label arranged on a facade of a coffee shop around the user, and access a corresponding service by using recognized identification information of the optical label to purchase a cup of coffee. When the user scans the optical label with the device, an image of the optical label can be captured, and relative positioning is performed by analyzing the image to determine location information of the user (or more accurately, the device of the user) relative to the optical label. The relative location information may be sent together with a coffee purchase request to a server of the coffee shop. The server of the coffee shop may set a virtual object after receiving the coffee purchase request of the user. The virtual object may be, for example, an order number "123" corresponding to the coffee purchase request. The server may further determine spatial location information of the virtual object according to the received location information of the user device relative to the optical label. For example, the server may set a location of the virtual object to a location of the user device or 1 meter above the location of the user device. After the coffee shop gets the coffee ready, a clerk of the coffee shop may deliver the coffee. FIG. 4 shows a schematic diagram of a clerk delivering coffee to a user. During delivery, the clerk may use a device (for example, a mobile phone or smart glasses) of the clerk to scan the optical label, to determine location information and attitude information of the device of the clerk relative to the optical label. The server may send related information (including the spatial location information) of the virtual object to the device of the clerk when the clerk scans the optical label using the device or at another time. In this way, the optical label can be used as an intermediate anchor to determine a location relationship between the virtual object and the clerk device, and the virtual object (for example, a digit sequence "123") may be further presented on a display medium of the clerk device based on an attitude of the clerk device. For example, the digit sequence "123" may be superimposed at a proper location in a real scene displayed on a display screen of the clerk device, and the coffee purchaser is located at the location of the digit sequence "123" or about 1 meter below the digit sequence "123". FIG. 5 shows a schematic diagram of superimposing the virtual object on the display medium of the clerk device. In this way, the optical label can be used as an anchor to realize accurate superimposition of the virtual object in the real scene, thereby helping the coffee shop clerk to quickly find the location of the coffee purchaser and deliver the coffee. In an embodiment, the coffee shop clerk may use smart glasses rather than a mobile phone for more convenient delivery.

Meal delivery service at a restaurant will be taken as another example for description. When dining in the restaurant, a user carrying a device may use the device to scan and identify an optical label arranged in the restaurant, and access a corresponding meal ordering service using recognized identification information of the optical label. When the user scans the optical label with the device, an image of the optical label can be captured, and relative positioning can be performed by analyzing the image to determine location information of the user (or more accurately, the device of the user) relative to the optical label. The relative location information may be sent together with a meal ordering request to a server of the restaurant. The server of the restaurant may set a virtual object after receiving the meal ordering request of the user. The virtual object may be, for example, an order number "456" corresponding to the meal ordering request. The server may further determine spatial location information of the virtual object according to the received location information of the user device relative to the optical label. For example, the server may set a location of the virtual object to a location of the user device or 1 meter above the location of the user device. After the restaurant gets dishes of the user ready, a clerk of the restaurant may deliver the dishes. During delivery, the clerk may use a device (for example, a mobile phone or smart glasses) to scan the optical label, to determine location information and attitude information of the device relative to the optical label. The server may send related information (including the spatial location information) of the virtual object to the device of the clerk when the clerk scans the optical label with the device or at another time. In this way, the optical label can be used as an intermediate anchor to determine a location relationship between the virtual object and the clerk device, and the virtual object (for example, a digit sequence "456") may be further presented on a display medium of the clerk device based on an attitude of the clerk device. For example, the digit sequence "456" may be superimposed at a proper location in a real scene displayed on a display screen of the clerk device, and the user to whom the dishes are to be delivered is located at the location of the digit sequence "456" or about 1 meter below the digit sequence "456". In this way, the optical label can be used as an anchor to realize accurate superimposition of the virtual object in the real scene, thereby helping the clerk of the restaurant to quickly find the location of the user who ordered the meal.

In an embodiment, the determined location information of the device may alternatively be location information of the device in another physical coordinate system. The physical coordinate system may be, for example, a site coordinate system (for example, a coordinate system established for a room, a building, or a campus) or a world coordinate system. In this case, the optical label may have location information and attitude information in the physical coordinate system, which may be calibrated and stored in advance. The location information of the device in the physical coordinate system can be determined by the location information of the device relative to the optical label and the location information and the attitude information of the optical label in the physical coordinate system. The device can recognize the information (for example, the identification information) transferred by the optical label, and use the information to obtain (for example, through query) the location information and the attitude information of the optical label in the physical coordinate system.

In an embodiment, the user may alternatively order a meal in any another manner instead of scanning and identifying the optical label. Instead of capturing an image of the optical label to determine the location information of the user, the user may alternatively scan a quick response code on a table or directly send a table number to the restaurant server to notify the restaurant server of the location of the user. The restaurant server may prestore location information of each table, and determine the location information of the user based on identification information of the quick response code scanned by the user or the table number sent by the user.

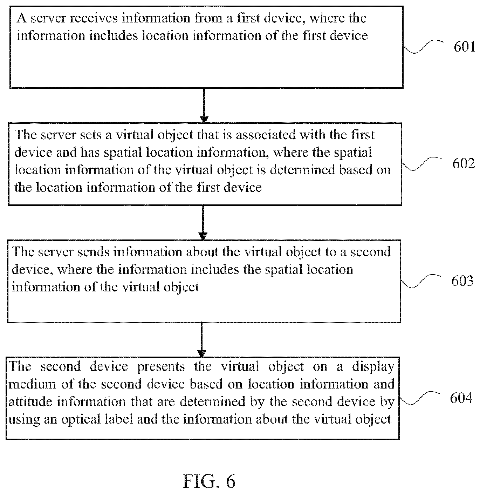

FIG. 6 shows an interaction method based on an optical label according to an embodiment. The method includes the following steps S601 to S604.

At step S601, a server receives information from a first device, which includes location information of the first device.

The information from the first device may be product purchase information sent by a user of the first device to the server, or may be any other information. The location information of the first device may be location information of the first device relative to an optical label, or may be location information of the first device in a physical coordinate system. The first device may send, to the server, the location information of the first device relative to the optical label together with identification information of the optical label that is recognized by scanning the optical label.

The device may determine the location information of the device relative to the optical label in various manners. The relative location information may include distance information and direction information of the device relative to the optical label. In an embodiment, the device may capture an image including the optical label and analyze the image to determine the location information of the device relative to the optical label. For example, the device may determine a relative distance between the optical label and the device (a larger image indicates a shorter distance; and a smaller image indicates a longer distance) using an image size of the optical label in the image and other optional information (for example, actual physical size information of the optical label, and a focal length of a camera of the device). The device may obtain the actual physical size information of the optical label from the server using the identification information of the optical label, or the optical label may have a uniform physical size which is stored on the device. The device may determine the direction information of the device relative to the optical label using perspective distortion of the optical label image in the image including the optical label and other optional information (for example, image location of the optical label). The device may obtain physical shape information of the optical label from the server using the identification information of the optical label, or the optical label may have a uniform physical shape which is stored on the device. In an embodiment, the device may alternatively use a depth camera, a binocular camera, or the like installed on the device to directly obtain the relative distance between the optical label and the device. The device may alternatively use any other existing positioning method to determine the location information of the device relative to the optical label.

At step S602, the server sets a virtual object that is associated with the first device and has spatial location information, where the spatial location information of the virtual object is determined based on the location information of the first device.

After receiving the information (for example, the product purchase information) from the first device, the server may set a virtual object associated with the first device. The virtual object may be, for example, an order number corresponding to the product purchase information sent by the first device, a name of the user purchasing the product, identification information of goods to be delivered a simple virtual icon, etc. The spatial location information of the virtual object is determined according to the location information of the first device. The spatial location information may be location information relative to the optical label, or may be location information in another physical coordinate system. The spatial location of the virtual object may be simply determined as a location of the first device, or may be determined as another location, for example, another location near the location of the first device.

At step S603, the server sends, to a second device, information about the virtual object which includes the spatial location information of the virtual object.

The information about the virtual object is used to describe related information of the virtual object, which may include for example a picture, a text, a digit, an icon, or the like included in the virtual object, or may include shape information, color information, size information, attitude information, or the like of the virtual object. The device may present the corresponding virtual object based on the information. The information about the virtual object includes the spatial location information of the virtual object, which may be the location information relative to the optical label (for example, distance information and direction information of the virtual object relative to the optical label). In an embodiment, the information about the virtual object may further include superimposition attitude information of the virtual object. The superimposition attitude information may be attitude information of the virtual object relative to the optical label, or may be attitude information of the virtual object in a real world coordinate system.

In an embodiment, the server may, for example, directly send the information about the virtual object to the second device over a radio link. In another embodiment, the second device may recognize the identification information transferred by the optical label when scanning the optical label, and obtain the information about the virtual object from the server using the identification information of the optical label.

At step S604, the second device presents the virtual object on a display medium of the second device based on location information and attitude information that are determined by the second device using the optical label and the information about the virtual object.

The location information of the second device may be location information of the second device relative to the optical label, or may be location information of the second device in a physical coordinate system. The second device may determine the location information of the second device relative to the optical label in various manners, such as the manners described in step S601, which are not described in detail herein.

The second device can determine its attitude information. The attitude information can be used to determine a range or a boundary of a real scene photographed by the device. The attitude information of the second device may be attitude information of the second device relative to the optical label, or may be attitude information of the second device in a physical coordinate system. The attitude information of the device in the physical coordinate system can be determined using the attitude information of the device relative to the optical label as well as location information and attitude information of the optical label in the physical coordinate system. Generally, the attitude information of the device is actually attitude information of an image capture component (for example, a camera) of the device. In an embodiment, the second device may scan the optical label, and may determine its attitude information relative to the optical label according to an image of the optical label. When an image location or an image region of the optical label is located at a center of an imaging field of view of the second device, it may be considered that the second device is currently facing the optical label. A direction of the image of the optical label may be further considered when the attitude of the device is determined. As the attitude of the second device changes, the image location and/or the image direction of the optical label on the second device changes accordingly. Therefore, the attitude information of the second device relative to the optical label can be obtained according to the image of the optical label on the second device.

In an embodiment, the location information and the attitude information (which may be collectively referred to as pose information) of the device relative to the optical label may alternatively be determined in the following manner. Specifically, a coordinate system may be established according to the optical label. The coordinate system may be referred to as an optical label coordinate system. Some points on the optical label may be determined as some space points in the optical label coordinate system, and coordinates of these space points in the optical label coordinate system may be determined according to the physical size information and/or the physical shape information of the optical label. These points on the optical label may be, for example, corners of a housing of the optical label, ends of light sources in the optical label, or some identification points in the optical label. According to a physical structure feature or a geometric structure feature of the optical label, image points corresponding to these space points can be found in the image captured by the device camera, and locations of the image points in the image can be determined. Pose information (R, t) of the device camera in the optical label coordinate system when the image is captured can be calculated according to the coordinates of the space points in the optical label coordinate system and the locations of the corresponding image points in the image in combination with intrinsic parameter information of the device camera, where R is a rotation matrix which may be used to indicate attitude information of the device camera in the optical label coordinate system, and t is a displacement vector which may be used to indicate location information of the device camera in the optical label coordinate system. A method for calculating R and t is known in the prior art. For example, a 3D-2D perspective-n-point (PnP) method may be used to calculate R and t, which is not described in detail herein in order not to obscure the present invention. The rotation matrix R and the displacement vector t actually may describe how to transform coordinates of a point between the optical label coordinate system and a device camera coordinate system. For example, coordinates of a point in the optical label coordinate system can be transformed into coordinates in the device camera coordinate system using the rotation matrix R and the displacement vector t, which may be further transformed into a location of an image point in the image. In this way, for the virtual object having a plurality of feature points (a plurality of points on a contour of the virtual object), the spatial location information of the virtual object may include coordinates of the plurality of feature points in the optical label coordinate system (that is, the location information relative to the optical label), and coordinates of these feature points in the device camera coordinate system can be determined based on the coordinates of the plurality of feature points in the optical label coordinate system, to determine respective image locations of these feature points on the device. Once the respective image locations of the plurality of feature points of the virtual object are determined, a location, a size, or an attitude of a complete image of the virtual object can be correspondingly determined.

In an embodiment, the to-be-superimposed virtual object may have a default image size. In an embodiment, when the information about the virtual object includes the superimposition attitude information of the virtual object, an attitude of the to-be-superimposed virtual object can be further determined. In an embodiment, a location, a size, an attitude, or the like of an image of the to-be-superimposed virtual object on the device can be determined according to the foregoing calculated pose information (R, t) of the device (or more accurately, the camera of the device) relative to the optical label. In a case where it is determined that the to-be-superimposed virtual object current is not within the field of view of the second device (for example, an image location of the virtual object is beyond a display screen), the virtual object is not displayed.

In an embodiment, after the first device or the second device scans the optical label, a location change and/or an attitude change of the device can be measured or tracked, for example, according to a method (for example, inertial navigation, using a visual odometer, SLAM, VSLAM, or SFM) known in the art using various sensors (for example, an acceleration sensor, a magnetic sensor, a direction sensor, a gravity sensor, a gyroscope, and a camera) built in the device, to determine a real-time location and/or attitude of the device.

In the foregoing embodiment, the optical label is actually used as an anchor on the basis of which an accurate superposition of the virtual object in the real scene observed by the second device is achieved. The device may present the real scene in various feasible manners. For example, the device can collect information about the real world by the camera and reproduce the real scene on the display screen using the information, and the image of the virtual object can be superimposed on the display screen. Alternatively, the device (for example, smart glasses) may not reproduce the real scene on the display screen, but simply reproduce the real scene through a prism, a lens, a reflector, a transparent object (for example, glass), or the like, and the image of the virtual object can be optically superimposed in the real scene. The display screen, the prism, the lens, the reflector, the transparent object, and the like may be collectively referred to as a display medium of the device on which the virtual object can be presented. For example, in an optical perspective augmented reality device, the user observes the real scene through a particular lens, and the lens can reflect the image of the virtual object to eyes of the user. In an embodiment, the user of the device can directly observe the real scene or a part of the real scene which does not need to be reproduced by any medium before observed by the eyes of the user, and the virtual object can be optically superimposed in the real scene. Therefore, the real scene or the part of the real scene does not necessarily need to be presented or reproduced by the device before observed by the eyes of the user.

After the virtual object is superimposed, the device may pan and/or rotate. In this case, a location change and an attitude change of the device may be tracked by a method known in the art (for example, using an acceleration sensor, a gyroscope, or a visual odometer built in the device), to adjust the displayed virtual object. However, the tracked location and attitude changes may have an error. Therefore, in an embodiment, the device may re-scan the optical label to determine location information and attitude information of the device (for example, when the optical label leaves the field of view of the device and reenters the field of view of the device again, or at regular intervals when the optical label stays in the field of view of the device), and re-determine an image location and/or an image size of the virtual object, to correct the virtual object superimposed in the real scene.

In an embodiment, after the virtual object is superimposed, the device or the user of the device may perform an operation on the virtual object, to change an attribute of the virtual object. For example, the device or the user of the device may move the location of the virtual object, change the attitude of the virtual object, change the size or color of the virtual object, or annotate the virtual object. In an embodiment, after the device or the user of the device changes the attribute of the virtual object, modified attribute information of the virtual object may be uploaded to the server. The server may update, based on the modified attribute information, the related information of the virtual object that is stored in the server. In an embodiment, the device or the user of the device may delete the superimposed virtual object, and notify the server. The foregoing coffee purchase application is still taken as an example. After the coffee shop clerk carrying the second device delivers the coffee to the user, the virtual digit sequence "123" associated with the user can be deleted.

In some embodiments, the information from the first device may not include the location information of the first device, and the server may obtain the location information of the first device in another manner. In an embodiment, the server may obtain the location information of the first device by analyzing the information from the first device. For example, the information from the first device may include an image captured by the first device which includes the optical label, and the server may analyze the image to obtain the location information of the first device relative to the optical label. In an embodiment, the server may obtain the location information of the first device through query using the information from the first device. For example, the information from the first device may be identification information of a quick response code or identification information such as a table number, and the server may obtain the location information of the first device through query based on the identification information. Any information that can be used to obtain the device location (for example, the image captured by the device which includes the optical label, the identification information of the quick response code scanned by the device, or the table number sent by the device) may be referred to as "information related to the location of the device".

In an embodiment, the display medium of the second device may present a plurality of virtual objects at the same time. In an embodiment, the server may determine one or more virtual objects that need to be presented on the display medium of the second device. For example, if a first clerk of the coffee shop needs to deliver coffee to a first user, the server may send related information of a virtual object associated with the first user to a device of the first clerk. In addition, if a second clerk of the coffee shop needs to deliver coffee to a second user and a third user, the server may send related information of a virtual object associated with the second user and related information of a virtual object associated with the third user to a device of the second clerk.

In some cases, the user may change his location after using the first device to send his location information to the server. For example, after the user purchasing the coffee sends a purchase request and location information, the user may walk around. To enable the server to learn the latest location of the user or the first device of the user in time, new location information of the first device may be sent to the server. The first device may determine latest location information by the foregoing manners (for example, capturing an image including the optical label and analyzing the image), or may track a location change of the first device by a sensor (for example, an acceleration sensor and a gyroscope) built in the first device. The new location information of the first device may be sent to the server periodically, or may be sent when a difference between a new location of the first device and a location sent to the server previously is greater than a preset threshold. In this way, the server may learn the new location information of the first device in time, and may correspondingly update the spatial location information of the virtual object, and notify the second device of the new spatial location information of the virtual object. The second device may correspondingly present or update the virtual object on the display medium of the second device using the new spatial location information of the virtual object.

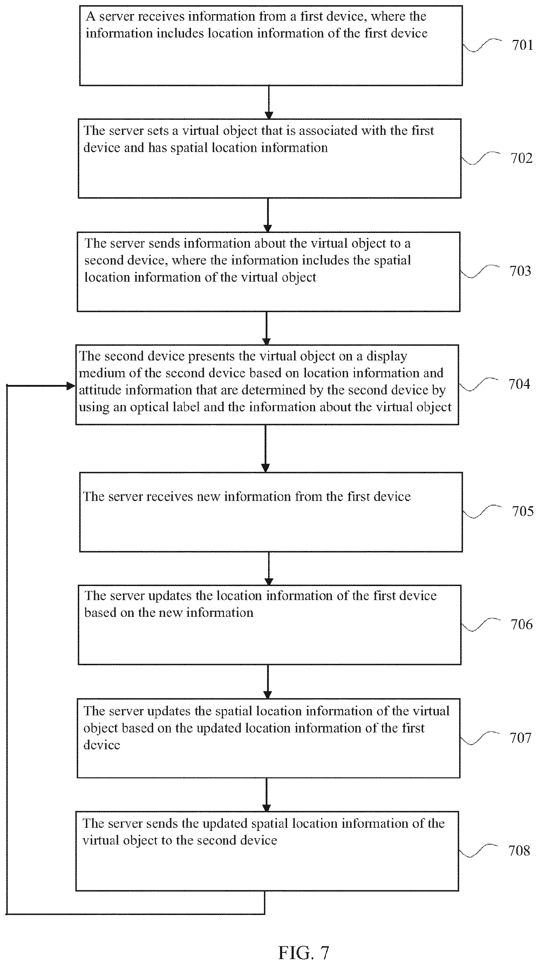

FIG. 7 shows an interaction method based on an optical label according to an embodiment. The method can implement the tracking of the location of the first device, and steps S701 to S704 thereof are similar to the steps S601 to S604 in FIG. 6, which are not described in detail herein. The interaction method in FIG. 7 further includes the following steps S705 to S708.

At step S705, the server receives new information from the first device.

The new information may be any information that can be used to obtain the location of the first device, for example, displacement information of the first device that is obtained through tracking by a sensor built in the first device.

At step S706, the server updates the location information of the first device based on the new information.

At step S707, the server updates the spatial location information of the virtual object based on the updated location information of the first device.

At step S708, the server sends the updated spatial location information of the virtual object to the second device, so that the second device can present or update the virtual object on its display medium based on the location information and the attitude information of the second device as well as the updated spatial location information of the virtual object.

In an embodiment, a virtual object associated with the second device may also be presented on a display medium of the first device. The coffee purchase service described above is taken as an example. During delivery, the clerk may use the device (for example, a mobile phone or smart glasses) to scan the optical label, to determine location information and attitude information of the device of the clerk. After that, the device of the clerk may send the location information of the device to the server. The server may set a virtual object for the device of the clerk. Spatial location information of the virtual object is determined based on the location information of the clerk device. The server may send related information of the virtual object to the device of the user purchasing coffee, and may notify the user that the coffee is being delivered. The user then may use the device (for example, a mobile phone or smart glasses) of the user to scan the optical label, to determine location information and attitude information of the user device. Then the user device may present the virtual object (for example, the digit sequence "123") at a proper location on the display medium of the user device based on the location information and the attitude information of the user device and the related information of the virtual object associated with the clerk device for more convenient interaction between the user and the clerk. The clerk delivering the coffee is usually moving, and therefore, a location of the clerk device may be tracked and sent to the server periodically or in real time, to update the spatial location information of the virtual object associated with the clerk device, and the updated spatial location information is subsequently sent to the device of the user.

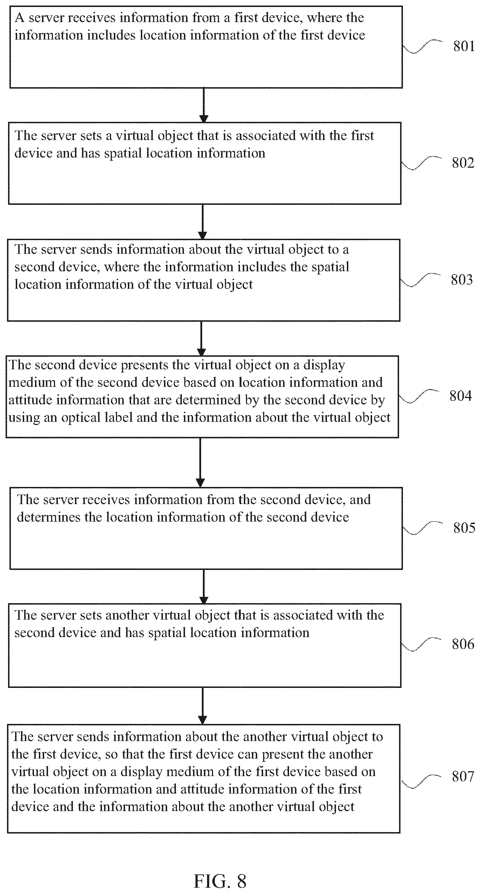

FIG. 8 shows an interaction method based on an optical label according to an embodiment. The method can further present, on the display medium of the first device, the virtual object associated with the second device, and steps S801 to S804 thereof are similar to the steps S601 to S604 in FIG. 6, which are not described in detail herein. The interaction method in FIG. 8 further includes the following steps S805 to S807.

At step S805, the server receives information from the second device, and determines the location information of the second device.

At step S806, the server sets another virtual object that is associated with the second device and has spatial location information, where the spatial location information of the another virtual object is determined based on the location information of the second device.

At step S807, the server sends information about the another virtual object to the first device, where the information includes the spatial location information of the another virtual object, so that the first device can present the another virtual object on its display medium based on the location information and attitude information of the first device and the information about the another virtual object.

In an embodiment, in the method shown in FIG. 8, the location information of the second device and the spatial location information of the another virtual object may be further updated in a manner similar to that described in the method in FIG. 7, so that the another virtual object presented on the display medium of the first device can track the location of the second device.

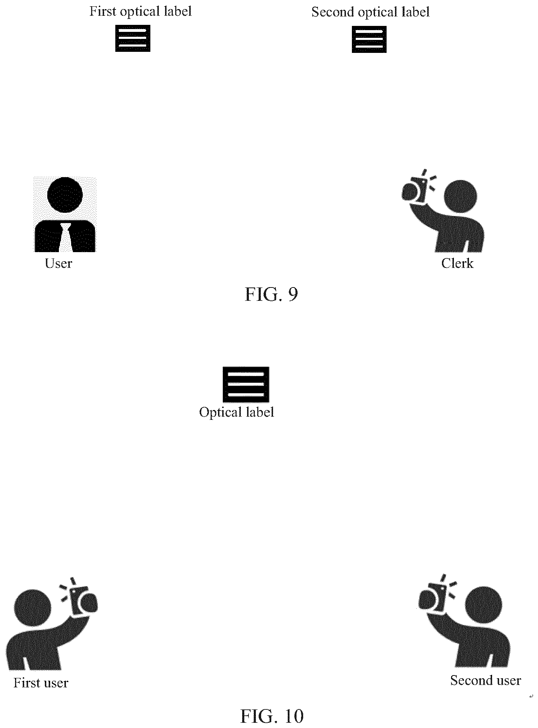

In many scenes, there may be more than one optical label, like the optical label network shown in FIG. 2. The server may learn pose information of optical labels or a relative pose relationship between the optical labels. In these scenes, the first device and the second device may scan different optical labels, the first device may scan a plurality of different optical labels at different time to provide or update the location information of the first device (which may send identification information of a related optical label when providing or updating the location information), and the second device may also scan a plurality of different optical labels at different time to determine the location information and the attitude information of the second device. For example, as shown in FIG. 9, a plurality of optical labels including a first optical label and a second optical label may be arranged in a restaurant, a user who is to dine may use a first device to scan a first optical label to determine a location of the user, and when delivering dishes, a clerk of the restaurant may use a second device to scan a second optical label to determine location information and attitude information of the second device.

In some scenes, initially, a distance between the first device and the second device may be long. In this case, the user of the second device may travel to near the first device by some existing navigation manners (for example, GPS navigation), and then use the second device to scan an optical label around to present, on a display medium of the second device, a virtual object associated with the first device.

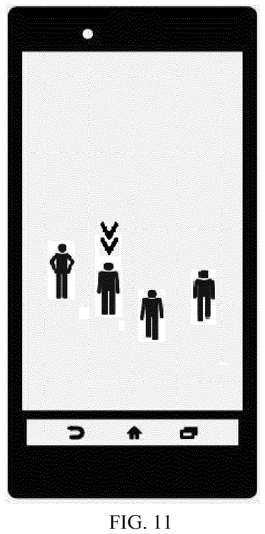

FIG. 10 shows an application scenario in which a location-based service scheme can be implemented between different individual users. In this scenario, there is an optical label, and a first user and a second user near the optical label. The first user carries a first device, the second user carries a second device, and the first device and the second device may be, for example, mobile phones or smart glasses. The optical label shown in FIG. 10 may be arranged on, for example, a square. When the first user on the square finds that there is a temporary need for a certain item (for example, scissors, tape, or medicine), but he/she does not have it, the first user may use the first device to scan and identify the optical label, to send a request, for example, "want to borrow or purchase an item A", to a server associated with the optical label. When the first user uses the first device to scan the optical label, an image of the optical label may be captured, and relative positioning may be performed according to the image to determine location information of the first user (or more accurately, the first device of the first user). The location information may be sent together with the request to the server. The server may set a virtual object for the first device after receiving the request from the first device. The virtual object may be, for example, an indicating arrow. The server may further determine spatial location information of the virtual object according to the received location information of the first device. For example, the server may set a location of the virtual object to a location of the first device or 1 meter above the location of the first device. After the first device sends the request to the server, the second user may use the second device to scan and identify the optical label, and receive, from the server associated with the optical label, the request sent by the first device. If the second user can provide the item A to meet the request of the first user, the second user may use the second device to send a response to the server. After receiving the response from the second device, the server may send, to the second device, related information of the virtual object (including the spatial location information of the virtual object) that is set for the first device. When scanning the optical label, the second device may determine location information and attitude information of the second device. In this way, the virtual object (for example, the indicating arrow) may be presented at a proper location on a display medium of the second device based on a location and an attitude of the second device. For example, the indicating arrow may be superimposed at a proper location in a real scene displayed on the display medium of the second device, and the first user or the first device is located at the location of the indicating arrow or about 1 meter below the indicating arrow. FIG. 11 shows a schematic diagram of superimposing the virtual object (for example, the indicating arrow) on the display medium of the second device. In this way, the optical label can be used as an anchor to realize accurate superimposition of the virtual object, to help the second user to quickly find the location of the first user, and implement interaction between the two users. It may be understood that, the first user and the second user may scan different optical labels.

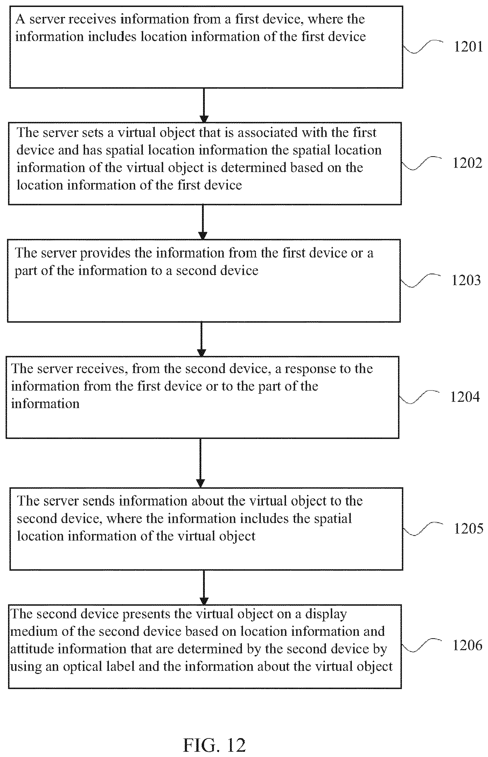

FIG. 12 shows an interaction method based on an optical label according to an embodiment. The method includes the following steps S1201 to S1206.

At step S1201, a server receives information from a first device, which includes location information of the first device.

The information from the first device may be, for example, a request for help sent by a user of the first device to the server, or may be any other information. The information sent by the first device to the user may include identification information of an optical label.

At step S1202, the server sets a virtual object that is associated with the first device and has spatial location information, where the spatial location information of the virtual object is determined based on the location information of the first device.

After receiving the information (for example, the request for help) from the first device, the server may set a virtual object associated with the first device. The spatial location information of the virtual object is determined according to the location information of the first device.

At step S1203, the server provides the information from the first device or a part of the information to a second device.

When the second device scans and identify an optical label, the second device may interact with the server using recognized identification information of the optical label. During interaction, the server may send the information received from the first device or a part of the information to the second device. For example, the server may send "the first user wants to borrow or purchase an item A" to the second device. The information from the first device may be presented on the second device of a second user in various forms, for example, an SMS message, or a pop-up notification in an application program. In an embodiment, a virtual message board may be presented on or near an optical label image presented on a display medium of the second device, and the information from the first device can be displayed on the virtual message board.

At step S1204, the server receives, from the second device, a response to the information from the first device or to the part of the information.

If the second user is interested in the information from the first device (for example, the second user can meet the request for help that is sent by the first user using the first device), the user may use the second device to send a response to the server.

At step S1205, the server sends information about the virtual object to the second device, which includes the spatial location information of the virtual object.

After receiving the response from the second device, the server may send the information about the virtual object to the second device. The information about the virtual object includes the spatial location information of the virtual object, which may be location information relative to the optical label. In an embodiment, the information about the virtual object may further include superimposition attitude information of the virtual object.

At step S1206, the second device presents the virtual object on the display medium of the second device based on location information and attitude information that are determined by the second device using the optical label and the information about the virtual object.

In some embodiments, with the method shown in FIG. 12, a location of the first device may further be tracked in a manner similar to that described in the method in FIG. 7. In some embodiments, with the method shown in FIG. 12, a virtual object associated with the second device may further present, on a display medium of the first device in a manner similar to that described in the method in FIG. 8.

In some embodiments, the information from the first device may have an associated valid time range, to limit a time range within which the information is valid. For example, when using the first device to send the request for help, the first user may set the request to be valid within a certain time (for example, 10 minutes). After the valid time range expires, the server may not send the information from the first device or a part of the information to another device.

In some embodiments, the information from the first device may have an associated valid geographic range, to limit a geographic range within which the information is valid. For example, in an application scenario, the first user uses the first device to send an event notification (for example, the first user is making a live performance at a location A) to the server, to invite other users to watch. The first user may set a geographic range associated with the event notification. For example, the first user may set the event notification to be available to other users within a range of 500 meters around the first user, or the first user may set the event notification to be available to other users interacting with optical labels within a range of 500 meters around the first user. In this way, the server may determine, based on determined relative distances between the first user and other users or determined relative distances between the first user and different optical labels, user devices to which the event notification is to be sent.

In an embodiment, the server may obtain attribute information of the device, and set, based on the attribute information of the device, the virtual object associated with the device. The attribute information of the device may include information about the device, information about the user of the device, and/or information customized by the user of the device, for example, a name or an identification number of the device, a name, an occupation, an identity, a gender, an age, a nickname, an avatar, or a signature of the user of the device, account information of an application on the device, or information about an operation performed by the user using the device, for example, website login, account registration, or purchase information.

In an embodiment, when the virtual object has attitude information, an attitude of the virtual object may be adjusted according to a location and/or an attitude of the device relative to the virtual object. For example, the virtual object (for example, a front direction of the virtual object) is always orientated to the device.

The device mentioned in this specification may be a device (for example, a mobile phone, a tablet computer, smart glasses, a smart helmet, or a smart watch) carried or controlled by a user, but it may be understood that the device may alternatively be a machine that can move autonomously, for example, an unmanned aerial vehicle, a driverless car, or a robot. An image capture component (for example, a camera) and/or a display medium (for example, a display screen) may be installed on the device.

In an embodiment of the present invention, the present invention may be implemented in a form of a computer program. The computer program may be stored in various storage media (for example, a hard disk, an optical disc, or a flash memory), and the computer program, when executed by a processor, causes the processor to implement the method of the present invention.

In another embodiment of the present invention, the present invention may be implemented in a form of an electronic device. The electronic device includes a processor and a memory, where the memory stores a computer program which, when executed by the processor, causes the processor to implement the method of the present invention.

Reference herein to "embodiments", "some embodiments", "one embodiment", "an embodiment", and the like means that a specific feature, structure, or property described with reference to the embodiment(s) is included in at least one embodiment. Therefore, appearance of the phrase "in the embodiments", "in some embodiments", "in one embodiment", or "in an embodiment" throughout this specification do not necessarily refer to the same embodiment. In addition, specific features, structures, or properties can be combined in any suitable manner in one or more embodiments. Therefore, a specific feature, structure, or property shown or described with reference to an embodiment can be combined entirely or partially with features, structures, or properties of one or more other embodiments without limitation, provided that the combination is logical or works. Expressions similar to "according to A", "based on A", "through A", or "using A" herein mean non-exclusive, that is, "according to A" may cover "according to only A", or cover "according to A and B", unless it is specifically stated or it can be clearly learned from the context that the meaning is "according to only A". For clarity in this application, some illustrative operation steps are described in a certain order, but persons skilled in the art can understand that each of the operation steps is not mandatory, and some of the steps can be omitted or replaced with other steps. The operation steps are not necessarily executed sequentially in the manner shown herein. On the contrary, some of the operation steps can be executed in a different order according to actual needs, or executed in parallel, provided that the new execution method is logical or works.

Thus, several aspects of at least one embodiment of the present invention have been described, and it can be understood that various changes, modifications, and improvements can be easily made by persons skilled in the art. Such changes, modifications, and improvements are intended to fall within the spirit and scope of the present invention. Although the present invention has been described through preferred embodiments, the present invention is not limited to the embodiments described herein, and also includes various changes and variations made without departing from the scope of the present invention.

## Claims

1. An interaction method based on an optical communication apparatus, comprising:
receiving, by a server, information about a location of a first device from the first device;
obtaining, by the server, location information of the first device using the information about the location of the first device;
setting, by the server, a virtual object that is associated with the first device and has spatial location information, wherein the spatial location information of the virtual object is determined based on the location information of the first device; and
sending, by the server, information about the virtual object to a second device, wherein the information comprises the spatial location information of the virtual object, and the information about the virtual object can be used by the second device to present the virtual object on a display medium of the second device based on location information and attitude information of the second device determined using the optical communication apparatus.

2. The method of claim 1, wherein the obtaining location information of the first device using the information about the location of the first device comprises at least one of the following:
extracting the location information of the first device from the information about the location of the first device;
obtaining the location information of the first device by analyzing the information about the location of the first device; or
obtaining the location information of the first device through query using the information about the location of the first device.

3. The method of claim 1, wherein the information about the location of the first device comprises location information of the first device relative to an optical communication apparatus, wherein the first device captures an image comprising the optical communication apparatus using an image capture component and analyzes the image to determine the location information of the first device relative to the optical communication apparatus.

4. The method of claim 1, wherein
the second device captures an image comprising an optical communication apparatus using an image capture component and analyzes the image to determine the location information and/or the attitude information of the second device.

5. The method of claim 1, further comprising:
determining, by the server before the server sends information about a virtual object to the second device, one or more virtual objects that are associated with one or more first devices and need to be presented on the display medium of the second device.

6. The method of claim 1, further comprising:
receiving, by the server, new information about the location of the first device from the first device;
updating, by the server, the location information of the first device based on the new information about the location of the first device;
updating, by the server, the spatial location information of the virtual object based on the updated location information of the first device; and
sending, by the server, the updated spatial location information of the virtual object to the second device, so that the second device can present or update the virtual object on the display medium of the second device based on the location information and the attitude information of the second device and the updated spatial location information of the virtual obj ect.

7. The method of claim 1, further comprising:
receiving, by the server, information about a location of the second device from the second device, and determining the location information of the second device;
setting, by the server, another virtual object that is associated with the second device and has spatial location information, wherein the spatial location information of the another virtual object is determined based on the location information of the second device; and
sending, by the server, information about the another virtual object to the first device, wherein the information comprises the spatial location information of the another virtual object, and the information about the another virtual object can be used by the first device to present the another virtual object on a display medium of the first device based on the location information and attitude information of the first device.

8. The method of claim 1, before the sending, by the server, information about the virtual object to a second device, further comprising:
providing, by the server, the information from the first device or a part of the information to the second device; and
receiving, by the server from the second device, a response to the information from the first device or to the part of the information.

9. The method of claim 1, further comprising:
obtaining, by the server, attribute information of the first device; and
setting, by the server based on the attribute information of the first device, the virtual object associated with the first device,
wherein the attribute information of the first device comprises information about the first device, information about a user of the first device, and/or information customized by the user of the first device.

10. The method of claim 1, wherein
the location information of the first device is location information relative to an optical communication apparatus, location information in a site coordinate system, or location information in a world coordinate system; and/or
the location information and the attitude information of the second device are location information and attitude information relative to an optical communication apparatus, location information and attitude information in a site coordinate system, or location information and attitude information in the world coordinate system.

11. The method of claim 10, wherein the optical communication apparatus associated with the location information of the first device and the optical communication apparatus associated with the location information of the second device are the same or different optical communication apparatuses, wherein the different optical communication apparatuses are in a certain relative pose relationship.

12. The method of claim 1, wherein an attitude of the virtual object can be adjusted according to change in a location and/or an attitude of the second device relative to the virtual object.

13. A computer program product, when executed by a processor, causes the processor to perform the method of any one of claims 1 to 12.

14. A storage medium, storing a computer program which, when executed by a processor, causes the processor to perform the method of any one of claims 1 to 12.

15. An electronic device, comprising a processor and a memory, wherein the memory stores a computer program which, when executed by the processor, causes the processor to perform the method of any one of claims 1 to 12.
